# EUROPÄISCHE PATENTSCHRIFT

(11) **EP 2 185 838 B1**
(45) Veröffentlichungstag und Bekanntmachung des Hinweises auf die Patenterteilung: **11.05.2011**
(21) Anmeldenummer: 08775220.0
(22) Anmeldetag: 18.07.2008
(51) Int. Cl.: F16F 15/26

(54) **MASSENAUSGLEICHSVORRICHTUNG FÜR EINE HUBKOLBEN-BRENNKRAFTMASCHINE**
MASS BALANCING DEVICE FOR A RECIPROCATING PISTON INTERNAL COMBUSTION ENGINE
DISPOSITIF D'ÉQUILIBRAGE DE MASSE POUR UN MOTEUR ALTERNATIF À COMBUSTION INTERNE

(30) Priorität: 07.08.2007 DE 102007037287
(43) Veröffentlichungstag der Anmeldung: 19.05.2010
(73) Patentinhaber: Schaeffler Technologies GmbH & Co. KG, 91074 Herzogenaurach (DE)
(72) Erfinder: MEDERER, Tobias, 90596 Schwanstetten (DE)
(86) Internationale Anmeldenummer: PCT/EP2008/059445
(87) Internationale Veröffentlichungsnummer: WO 2009/019122

(56) Entgegenhaltungen:
- EP-A- 0 789 166
- EP-A- 1 775 484
- DE-A1- 2 822 589

## Beschreibung

### Gebiet der Erfindung

Die Erfindung betrifft eine Massenausgleichsvorrichtung für eine Hubkolben-Brennkraftmaschine. Die Massenausgleichsvorrichtung umfasst eine erste Ausgleichswelle und eine zweite Ausgleichswelle, die in der ersten Ausgleichswelle zu dieser koaxial und gegenläufig rotierend angeordnet ist, wobei die erste Ausgleichswelle zumindest eine Lagerstelle für ein erstes Wälzlager aufweist und wobei die zweite Ausgleichswelle zumindest eine Lagerstelle für ein zweites Wälzlager aufweist, mittels welcher Wälzlager die Ausgleichswellen in der Hubkolben-Brennkraftmaschine radial abgestützt sind.

### Hintergrund der Erfindung

Eine derartige Massenausgleichsvorrichtung geht aus der als gattungsbildend betrachteten DE 28 22 589 A1 hervor. Die koaxiale Anordnung der ineinander gesteckten Ausgleichswellen ermöglicht zwar gegenüber der in der Praxis üblichen Bauweise mit achsversetzten Ausgleichswellen eine in radialer Richtung besonders kompakt bauende Massenausgleichsvorrichtung, die jedoch bei technischer Umsetzung der in der zitierten Druckschrift vorgeschlagenen Anordnung einen erheblichen axialen Bauraumbedarf aufweisen würde. Dies liegt im wesentlichen darin begründet, dass sämtliche Wälzlager jeweils nur der einen oder der anderen Ausgleichswelle zugeordnet sind und folglich in axialer Richtung bei entsprechendem Bauraummehrbedarf in Axialrichtung nebeneinander angeordnet werden müssen.

### Aufgabe der Erfindung

Der vorliegenden Erfindung liegt daher die Aufgabe zugrunde, eine Massenausgleichsvorrichtung der eingangs genannten Art so fortzubilden, dass die Massenausgleichsvorrichtung nicht nur in radialer Richtung, sondern auch in axialer Richtung möglichst kompakt bauend ausgeführt werden kann.

### Zusammenfassung der Erfindung

Die Lösung dieser Aufgabe ergibt sich aus den kennzeichnenden Merkmalen des Anspruchs 1, während vorteilhafte Weiterbildungen und Ausgestaltungen der Erfindung den Unteransprüchen entnehmbar sind. Demnach soll zumindest eine der Lagerstellen hohlzylindrisch mit einer als Lagersitz oder Innenlaufbahn für das erste Wälzlager dienenden Außenmantelfläche und mit einer als Lagersitz oder Außenlaufbahn für das zweite Wälzlager dienenden Innenmantelfläche ausgebildet sein derart, dass sich das erste Wälzlager und das zweite Wälzlager axial überwiegend oder vollständig überdecken. Der gegenüber dem zitierten Stand der Technik geringere axiale Bauraumbedarf des Massenausgleichsgetriebes basiert mit anderen Worten auf einer Reihenschaltung der Wälzlager in radialer Richtung. Da hierbei stets eines der Wälzlager zusätzlich auch die Belastung des jeweils anderen Wälzlagers mit übertragen muss, sind die Wälzlager selbstverständlich diesen spezifischen Lastverhältnissen entsprechend zu dimensionieren.

Der aufgrund der Reihenschaltung der Wälzlager ggf. erhöhte radiale Bauraumbedarf der Massenausgleichsvorrichtung lässt sich in Weiterbildung der Erfindung dadurch in engen Grenzen halten, dass das erste Wälzlager und/oder das zweite Wälzlager als Nadelkranz ausgebildet sind. Der Nadelkranz ist dem Fachmann auf dem Gebiet der Wälzlagertechnik als ringloses und folglich radial besonders bauraumsparendes Nadellager bestehend aus einem Käfig und den darin eingesetzten Nadelrollen bekannt.

Insbesondere im Falle einer radialen Zweifachlagerung der Massenausgleichsvorrichtung ist es im Hinblick auf deren minimalen axialen Bauraumbedarf konsequenterweise vorgesehen, dass die erste Ausgleichswelle und die zweite Ausgleichswelle jeweils zwei der erfindungsgemäßen Lagerstellen aufweisen. Außerdem soll dabei zumindest eine der Ausgleichswellen einen die beiden Lagerstellen verbindenden Unwuchtabschnitt mit im wesentlichen kreisringstückförmigem Querschnitt aufweisen. Ein so gestalteter Unwuchtabschnitt der Ausgleichswelle berücksichtigt nicht nur den erforderlichen Rotationsfreigang zur jeweils anderen Ausgleichswelle, sondern bietet auch ein hohes Leichtbaupotenzial, da naturgemäß der kreisringstückförmige Querschnitt zum einem einen exzentrischen Massenschwerpunkt aufweist und zum anderen frei von unwuchtloser Masse auf der Achse der Ausgleichswelle ist. Zudem ist eine geometrisch einfache und fertigungsgerechte Gestaltung einer solchen Ausgleichswelle dann gegeben, wenn der Querschnitt des Unwuchtabschnitts über dessen gesamte Axialerstreckung gleichförmig ausgebildet ist.

In einer hinsichtlich der radialen Abstützung der Ausgleichswellen ersten Ausgestaltung der Erfindung soll die Hubkolben-Brennkraftmaschine einen das erste Wälzlager umschließenden Gehäuselagersitz zur Abstützung der Ausgleichswellen aufweisen, wobei die Lagerstelle der ersten Ausgleichswelle hohlzylindrisch mit der als Lagersitz oder Innenlaufbahn für das erste Wälzlager dienenden Außenmantelfläche und mit der als Lagersitz oder Außenlaufbahn für das zweite Wälzlager dienenden Innenmantelfläche ausgebildet ist. Unter der Voraussetzung einer geeigneten Material- und Oberflächenbeschaffenheit des Gehäuselagersitzes kann es dabei insbesondere bei Verwendung des vorgenannten Nadelkranzes als erstes Wälzlager vorgesehen sein, dass der Gehäuselagersitz als Außenlaufbahn für das erste Wälzlager dient.

In einer hinsichtlich der radialen Abstützung der Ausgleichswellen alternativen zweiten Ausgestaltung soll die Hubkolben-Brennkraftmaschine einen vom zweiten Wälzlager umschlossenen Lagerzapfen zur Abstützung der Ausgleichswellen aufweisen, wobei die Lagerstelle der zweiten Ausgleichswelle hohlzylindrisch mit der als Lagersitz oder Innenlaufbahn für das erste Wälzlager dienenden Außenmantelfläche und mit der als Lagersitz oder Außenlaufbahn für das zweite Wälzlager dienenden Innenmantelfläche ausgebildet ist. Während es sich bei dieser alternativen Ausgestaltung der Erfindung quasi um eine kinematisch umgekehrte Abstützung der Ausgleichswellen handelt, kann analog zu dem als Außenlaufbahn für das erste Wälzlager ausgebildeten Gehäuselagersitz der Lagerzapfen als Innenlaufbahn für das zweite Wälzlager dienen.

Zum Antrieb und zur Erzeugung der gegenläufigen Rotation der Ausgleichswellen ist es ferner vorgesehen, dass die Ausgleichswellen jeweils mit einer Stirnradverzahnung versehen sind, wobei die eine Stirnradverzahnung unmittelbar mit einem Antriebsrad und die andere Stirnradverzahnung mittels eines Zwischenrades mit dem Antriebsrad kämmen.

Schließlich sollen die vorgenannten Ausgestaltungen, soweit technisch möglich und sinnvoll, in beliebiger Weise miteinander kombinierbar sein.

### Kurze Beschreibung der Zeichnungen

Weitere Merkmale der Erfindung ergeben sich aus der nachfolgenden Beschreibung und den Zeichnungen, in denen Ausführungsbeispiele der Erfindung vereinfacht dargestellt sind. Sofern nicht anders erwähnt, sind dabei gleiche oder funktionsgleiche Merkmale oder Bauteile mit gleichen Bezugszahlen versehen. Es zeigen:
- Figur 1: ein erstes Ausführungsbeispiel einer erfindungsgemäßen Mas- senausgleichsvorrichtung in vereinfachter perspektivischer Dar- stellung;
- Figur 2: die Massenausgleichsvorrichtung gemäß Figur 1 im Längsschnitt und
- Figur 3: ein zweites Ausführungsbeispiel einer erfindungsgemäßen Mas- senausgleichsvorrichtung in vereinfachter perspektivischer Dar- stellung.

### Ausführliche Beschreibung der Zeichnungen

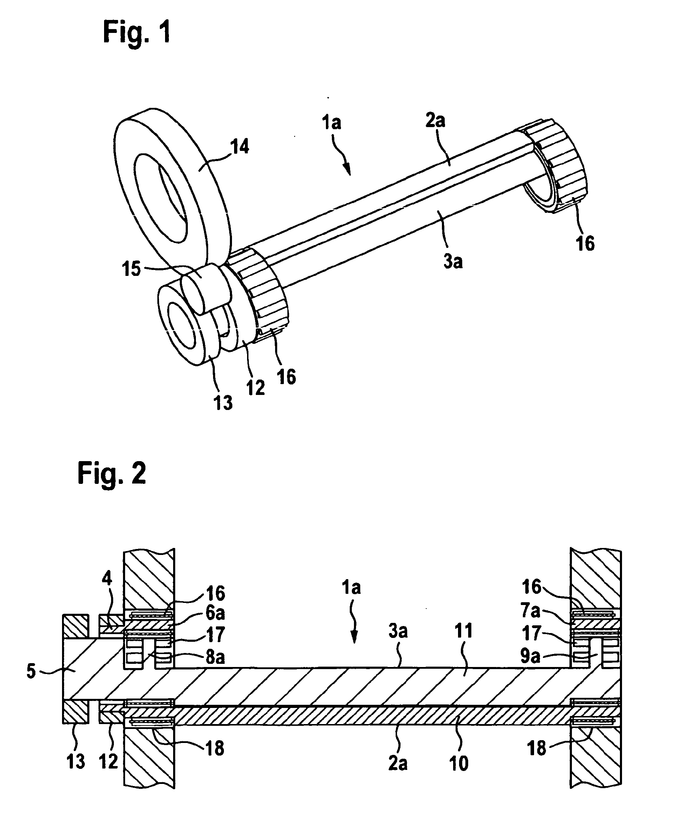

In den Figuren 1 und 2 ist ein erstes Ausführungsbeispiel einer erfindungsgemäßen Massenausgleichsvorrichtung 1a einer Hubkolben-Brennkraftmaschine in perspektivischer Darstellung bzw. im Längsschnitt offenbart. Dargestellt sind eine erste Ausgleichswelle 2a und eine innerhalb dieser koaxial angeordnete zweite Ausgleichswelle 3a, wobei die Ausgleichswellen 2a und 3a hier zum Ausgleich freier Massenkräfte zweiter Ordnung einer 4-Zylinderreihenmaschine mit doppelter Kurbelwellendrehzahl gegenläufig rotieren. Die Ausgleichswellen 2a und 3a umfassen jeweils einen Antriebsabschnitt 4 bzw. 5, zwei radiale Lagerstellen 6a und 7a bzw. 8a und 9a sowie einen zwischen den beiden Lagerstellen 6a, 7a bzw. 8a, 9a verlaufenden Unwuchtabschnitt 10 bzw. 11. Dabei sind die Ausgleichswellen 2a, 3a so gestaltet, dass die Beträge der von diesen erzeugten Unwuchten gleich groß sind.

Beide Antriebsabschnitte 4, 5 sind mit einer Stirnradverzahnung 12 bzw. 13 versehen, wobei zur Erzeugung der gegenläufigen Rotation die Stirnradverzahnung 12 der ersten Ausgleichswelle 2a unmittelbar mit einem Antriebsrad 14 und die Stirnradverzahnung 13 der zweiten Ausgleichswelle 3a mittelbar über ein Zwischenrad 15 mit dem Antriebsrad 14 kämmen. Unabhängig davon, ob das Antriebsrad 14 auf der Kurbelwelle der Hubkolben-Brennkraftmaschine angeordnet oder selbst von der Kurbelwelle angetriebenes Zwischenrad ist, beträgt das Übersetzungsverhältnis zwischen der Kurbelwelle und den Stirnrädern 12, 13 1:2. Eine Axiallagerung der Ausgleichswellen 2a, 2b ist selbstverständlich ebenfalls vorgesehen, jedoch aus Gründen der vereinfachten Darstellung in keiner der Figuren 1 bis 3 enthalten.

Wie es insbesondere aus Figur 2 deutlich wird, sind die Lagerstellen 6a und 8a sowie 7a und 9a jeweils zu einem Lagerstellenpaar radial in Reihe geschaltet. Zur radialen Abstützung der Ausgleichswellen 2a, 3a dienen erste Wälzlager 16 und zweite Wälzlager 17, die den Lagerstellen 6a, 7a der ersten Ausgleichswelle 2a bzw. den Lagerstellen 8a, 9a der zweiten Ausgleichswelle 3a zugeordnet sind und die sich entsprechend der radialen Reihenschaltung der Lagerstellen 6a und 8a bzw. 7a und 9a in axialer Richtung hier vollständig überdecken. Sowohl die ersten als auch die zweiten Wälzlager 16 bzw. 17 sind jeweils als Nadelkranz, bestehend aus einem Käfig und den darin angeordneten Nadeln ausgebildet.

Bei diesem Ausführungsbeispiel der Massenausgleichsvorrichtung 1a erfolgt die Abstützung der Ausgleichswellen 2a, 3a in jeweils das erste Wälzlager 16 umschließenden Gehäuselagersitzen 18 der Hubkolben-Brennkraftmaschine. Die Gehäuselagersitze 18 dienen jeweils als Außenlaufbahn und die Außenmantelflächen der hohlzylindrisch ausgebildeten Lagerstellen 6a, 7a der ersten Ausgleichswelle 2a als Innenlaufbahn für die ersten Wälzlager 16. Analog hierzu dienen die Innenmantelflächen der Lagerstellen 6a, 7a jeweils als Außenlaufbahn und die Außenmantelflächen der Lagerstellen 8a, 9a als Innenlaufbahn für die zweiten Wälzlager 17.

In Figur 2 ist ferner erkennbar, dass die Lagerstellen 8a, 9a der zweiten Ausgleichswelle 3a eine über deren Umfang veränderliche Breite aufweisen. Eine derartige Gestaltung von Ausgleichswellenlagerstellen ist als solche im Stand der Technik aus der EP 1 775 484 A2 bekannt und basiert auf der Überlegung, gering oder gar nicht belastete Umfangsabschnitte einer infolge Unwucht lediglich mit Punktlast beaufschlagten Lagerstelle in der Breite reduzieren oder völlig entfernen zu können, ohne die Funktion des der Lagerstelle zugeordneten Wälzlagers zu beeinträchtigen.

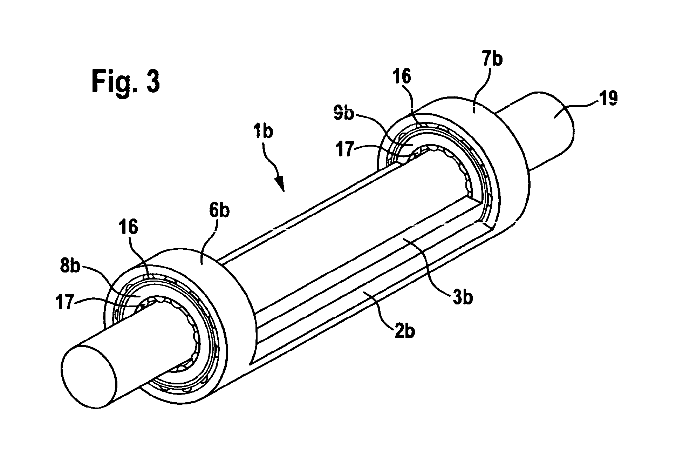

Wie außerdem aus den Figuren 1 und 2 hervorgeht, weist der Unwuchtabschnitt 10 der ersten Ausgleichswelle 2a einen über dessen gesamte Axialerstreckung gleichförmigen und hier kreisringstückförmigen Querschnitt auf. Bei einer in Figur 3 dargestellten Massenausgleichsvorrichtung 1b trifft dies nicht nur für eine äußere erste Ausgleichswelle 2b, sondern auch für eine innere zweite Ausgleichswelle 3b zu. Dieses zweite Ausführungsbeispiel der Erfindung unterscheidet sich von der Massenausgleichsvorrichtung 1a im wesentlichen durch die konstruktive Gestaltung der radialen Abstützung der Ausgleichswellen 2b, 3b in der Hubkolben-Brennkraftmaschine und ist gewissermaßen eine kinematische Umkehrung der radialen Abstützung gemäß den Figuren 1 und 2. In diesem Fall weist die Hubkolben-Brennkraftmaschine einen stationären Lagerzapfen 19 auf, der von den hier ebenfalls als Nadelkranz ausgebildeten zweiten Wälzlagern 17 umschlossen ist und als Innenlaufbahn für diese dient. Deren Außenlaufbahn wird jeweils durch die Innenmantelfläche von zwei hohlzylindrisch ausgebildeten Lagerstellen 8b und 9b der zweiten Ausgleichswelle 3b gebildet. Die Außenmantelflächen dieser Lagerstellen 8b, 9b dienen jeweils als Innenlaufbahn für die ersten Wälzlager 16, die ihrerseits von hohlzylindrischen Lagerstellen 6b und 7b der ersten Ausgleichswelle 2b umschlossen sind.

### Liste der Bezugszahlen

- 1a,b: Massenausgleichsvorrichtung
- 2a,b: erste Ausgleichswelle
- 3a,b: zweite Ausgleichswelle
- 4: Antriebsabschnitt der ersten Ausgleichswelle
- 5: Antriebsabschnitt der zweiten Ausgleichswelle
- 6a,b: Lagerstelle der ersten Ausgleichswelle
- 7a,b: Lagerstelle der ersten Ausgleichswelle
- 8a,b: Lagerstelle der zweiten Ausgleichswelle
- 9a,b: Lagerstelle der zweiten Ausgleichswelle
- 10: Unwuchtabschnitt der ersten Ausgleichswelle
- 11: Unwuchtabschnitt der zweiten Ausgleichswelle
- 12: Stirnradverzahnung der ersten Ausgleichswelle
- 13: Stirnradverzahnung der zweiten Ausgleichswelle
- 14: Antriebsrad
- 15: Zwischenrad
- 16: erstes Wälzlager
- 17: zweites Wälzlager
- 18: Gehäuselagersitz
- 19: Lagerzapfen

## Patentansprüche

1. Massenausgleichsvorrichtung (1a, 1b) für eine Hubkolben-Brennkraftmaschine, umfassend eine erste Ausgleichswelle (2a, 2b) und eine zweite Ausgleichswelle (3a, 3b), die in der ersten Ausgleichswelle (2a, 2b) zu dieser koaxial und gegenläufig rotierend angeordnet ist, wobei die erste Ausgleichswelle (2a, 2b) zumindest eine Lagerstelle (6a, 7a, 6b, 7b) für ein erstes Wälzlager (16) aufweist und wobei die zweite Ausgleichswelle (3a, 3b) zumindest eine Lagerstelle (8a, 9a, 8b, 9b) für ein zweites Wälzlager (17) aufweist, mittels welcher Wälzlager (16, 17) die Ausgleichswellen (2a, 3a, 2b, 3b) in der Hubkolben-Brennkraftmaschine radial abgestützt sind, **dadurch gekennzeichnet, dass** zumindest eine der Lagerstellen (6a, 7a, 8b, 9b) hohlzylindrisch mit einer als Lagersitz oder Innenlaufbahn für das erste Wälzlager (16) dienenden Außenmantelfläche und mit einer als Lagersitz oder Außenlaufbahn für das zweite Wälzlager (17) dienenden Innenmantelfläche ausgebildet ist derart, dass sich das erste Wälzlager (16) und das zweite Wälzlager (17) axial überwiegend oder vollständig überdecken.

2. Massenausgleichsvorrichtung (1a, 1b) nach Anspruch 1, **dadurch gekennzeichnet, dass** das erste Wälzlager (16) und/oder das zweite Wälzlager (17) als Nadelkranz ausgebildet sind.

3. Massenausgleichsvorrichtung (1a, 1b) nach Anspruch 1, **dadurch gekennzeichnet, dass** die erste Ausgleichswelle (2a, 2b) und die zweite Ausgleichswelle (3a, 3b) jeweils zwei der Lagerstellen (6a, 7a, 8b, 9b) aufweisen.

4. Massenausgleichsvorrichtung (1a, 1b) nach Anspruch 3, **dadurch gekennzeichnet, dass** zumindest eine der Ausgleichswellen (2a, 2b, 3b) einen deren Lagerstellen (6a, 7a, 6b, 7b, 8b, 9b) verbindenden Unwuchtabschnitt (10, 11) mit im wesentlichen kreisringstückförmigem Querschnitt aufweist.

5. Massenausgleichsvorrichtung (1a, 1b) nach Anspruch 4, **dadurch gekennzeichnet, dass** der Querschnitt des Unwuchtabschnitts (10, 11) über dessen gesamte Axialerstreckung gleichförmig ausgebildet ist.

6. Massenausgleichsvorrichtung (1a) nach Anspruch 1, **dadurch gekennzeichnet, dass** die Hubkolben-Brennkraftmaschine einen das erste Wälzlager (16) umschließenden Gehäuselagersitz (18) zur Abstützung der Ausgleichswellen (2a, 3a) aufweist, wobei die Lagerstelle (6a, 7a) der ersten Ausgleichswelle (2a) hohlzylindrisch mit der als Lagersitz oder Innenlaufbahn für das erste Wälzlager (16) dienenden Außenmantelfläche und mit der als Lagersitz oder Außenlaufbahn für das zweite Wälzlager (17) dienenden Innenmantelfläche ausgebildet ist.

7. Massenausgleichsvorrichtung (1a) nach Anspruch 6, **dadurch gekennzeichnet, dass** der Gehäuselagersitz (18) als Außenlaufbahn für das erste Wälzlager (16) dient.

8. Massenausgleichsvorrichtung (1b) nach Anspruch 1, **dadurch gekennzeichnet, dass** die Hubkolben-Brennkraftmaschine einen vom zweiten Wälzlager (17) umschlossenen Lagerzapfen (19) zur Abstützung der Ausgleichswellen (2b, 3b) aufweist, wobei die Lagerstelle (8b, 9b) der zweiten Ausgleichswelle (3b) hohlzylindrisch mit der als Lagersitz oder Innenlaufbahn für das erste Wälzlager (16) dienenden Außenmantelfläche und mit der als Lagersitz oder Außenlaufbahn für das zweite Wälzlager (17) dienenden Innenmantelfläche ausgebildet ist.

9. Massenausgleichsvorrichtung (1 b) nach Anspruch 8, **dadurch gekennzeichnet, dass** der Lagerzapfen (19) als Innenlaufbahn für das zweite Wälzlager (17) dient.

10. Massenausgleichsvorrichtung (1a) nach Anspruch 1, **dadurch gekennzeichnet, dass** die Ausgleichswellen (2a, 3a) jeweils mit einer Stirnradverzahnung (12, 13) versehen sind, wobei die eine Stirnradverzahnung (12) unmittelbar mit einem Antriebsrad (14) und die andere Stimradverzahnung (13) mittels eines Zwischenrades (15) mit dem Antriebsrad (14) kämmen.

## Claims

1. Mass balancing device (1a, 1b) for a reciprocating-piston internal combustion engine, comprising a first balancing shaft (2a, 2b) and a second balancing shaft (3a, 3b) which is arranged in the first balancing shaft (2a, 2b) coaxially with respect thereto and so as to rotate in the opposite direction thereto, the first balancing shaft (2a, 2b) having at least one bearing point (6a, 7a, 6b, 7b) for a first rolling bearing (16), and the second balancing shaft (3a, 3b) having at least one bearing point (8a, 9a, 8b, 9b) for a second rolling bearing (17), by means of which rolling bearings (16, 17) the balancing shafts (2a, 3a, 2b, 3b) are supported radially in the reciprocating-piston internal combustion engine, **characterized in that** at least one of the bearing points (6a, 7a, 8b, 9b) is of hollow cylindrical design with an outer lateral surface which serves as a bearing seat or inner raceway for the first rolling bearing (16) and with an inner lateral surface which serves as a bearing seat or outer raceway for the second rolling bearing (17), in such a way that the first rolling bearing (16) and the second rolling bearing (17) predominantly or entirely overlap axially.

2. Mass balancing device (1a, 1b) according to Claim 1, **characterized in that** the first rolling bearing (16) and/or the second rolling bearing (17) are/is designed as a needle ring.

3. Mass balancing device (1a, 1b) according to Claim 1, **characterized in that** the first balancing shaft (2a, 2b) and the second balancing shaft (3a, 3b) have in each case two of the bearing points (6a, 7a, 8b, 9b).

4. Mass balancing device (1a, 1b) according to Claim 3, **characterized in that** at least one of the balancing shafts (2a, 2b, 3b) has an imbalance section (10, 11) which connects the bearing points (6a, 7a, 6b, 7b, 8b, 9b) thereof and which has a cross section substantially in the shape of a circular ring segment.

5. Mass balancing device (1a, 1b) according to Claim 4, **characterized in that** the cross section of the imbalance section (10, 11) is formed so as to be uniform over the entire axial extent thereof.

6. Mass balancing device (1a) according to Claim 1, **characterized in that** the reciprocating-piston internal combustion engine has a housing bearing seat (18), which surrounds the first rolling bearing (16), for supporting the balancing shafts (2a, 3a), the bearing point (6a, 7a) of the first balancing shaft (2a) being of hollow cylindrical design with the outer lateral surface which serves as a bearing seat or inner raceway for the first rolling bearing (16) and with the inner lateral surface which serves as a bearing seat or outer raceway for the second rolling bearing (17).

7. Mass balancing device (1a) according to Claim 6, **characterized in that** the housing bearing seat (18) serves as an outer raceway for the first rolling bearing (16).

8. Mass balancing device (1b) according to Claim 1, **characterized in that** the reciprocating-piston internal combustion engine has a bearing journal (19), which is surrounded by the second rolling bearing (17), for supporting the balancing shafts (2b, 3b), the bearing point (8b, 9b) of the second balancing shaft (3b) being of hollow cylindrical design with the outer lateral surface which serves as a bearing seat or inner raceway for the first rolling bearing (16) and with the inner lateral surface which serves as a bearing seat or outer raceway for the second rolling bearing (17).

9. Mass balancing device (1b) according to Claim 8, **characterized in that** the bearing journal (19) serves as an inner raceway for the second rolling bearing (17).

10. Mass balancing device (1a) according to Claim 1, **characterized in that** the balancing shafts (2a, 3a) are provided in each case with a spur gear toothing (12, 13), one spur gear toothing (12) meshing directly with a drive gear (14) and the other spur gear toothing (13) meshing with the drive gear (14) via an intermediate gear (15).

## Revendications

1. Dispositif d'équilibrage de masse (1a, 1b) pour un moteur à combustion interne à piston alternatif, comprenant un premier arbre d'équilibrage (2a, 2b) et un deuxième arbre d'équilibrage (3a, 3b), qui est disposé dans le premier arbre d'équilibrage (2a, 2b) de manière coaxiale à celui-ci et de manière à tourner en sens inverse, le premier arbre d'équilibrage (2a, 2b) présentant au moins un point de palier (6a, 7a, 6b, 7b) pour un premier palier à roulement (16) et le deuxième arbre d'équilibrage (3a, 3b) présentant au moins un point de palier (8a, 9a, 8b, 9b) pour un deuxième palier à roulement (17), au moyen desquels paliers à roulement (16, 17) les arbres d'équilibrage (2a, 3a, 2b, 3b) sont supportés radialement dans le moteur à combustion interne à piston alternatif, **caractérisé en ce qu'**au moins l'un des points de palier (6a, 7a, 8b, 9b) est réalisé sous forme cylindrique creuse avec une surface d'enveloppe extérieure servant de siège de palier ou de piste de roulement intérieure pour le premier palier à roulement (16) et avec une surface d'enveloppe intérieure servant de siège de palier ou de piste de roulement extérieure pour le deuxième palier à roulement (17), de telle sorte que le premier palier à roulement (16) et le deuxième palier à roulement (17) se recouvrent axialement sensiblement ou complètement.

2. Dispositif d'équilibrage de masse (1a, 1b) selon la revendication 1, **caractérisé en ce que** le premier palier à roulement (16) et/ou le deuxième palier à roulement (17) sont réalisés sous forme de couronne à aiguilles.

3. Dispositif d'équilibrage de masse (1a, 1b) selon la revendication 1, **caractérisé en ce que** le premier arbre d'équilibrage (2a, 2b) et le deuxième arbre d'équilibrage (3a, 3b) présentent à chaque fois deux des points de palier (6a, 7a, 8b, 9b).

4. Dispositif d'équilibrage de masse (1a, 1b) selon la revendication 3, **caractérisé en ce qu'**au moins l'un des arbres d'équilibrage (2a, 2b, 3b) présente une portion de déséquilibre (10, 11) reliant ses points de palier (6a, 7a, 6b, 7b, 8b, 9b) avec une section transversale essentiellement en forme de segment annulaire.

5. Dispositif d'équilibrage de masse (1a, 1b) selon la revendication 4, **caractérisé en ce que** la section transversale de la portion de déséquilibre (10, 11) est réalisée de manière uniforme sur toute son étendue axiale.

6. Dispositif d'équilibrage de masse (1a) selon la revendication 1, **caractérisé en ce que** le moteur à combustion interne à piston alternatif présente un siège de palier de boîtier (18) entourant le premier palier à roulement (16) pour supporter les arbres d'équilibrage (2a, 3a), le point de palier (6a, 7a) du premier arbre d'équilibrage (2a) étant réalisé sous forme cylindrique creuse avec la surface d'enveloppe extérieure servant de siège de palier ou de piste de roulement intérieure pour le premier palier à roulement (16) et avec la surface d'enveloppe intérieure servant de siège de palier ou de piste de roulement extérieure pour le deuxième palier à roulement (17).

7. Dispositif d'équilibrage de masse (1a) selon la revendication 6, **caractérisé en ce que** le siège de palier de boîtier (18) sert de piste de roulement extérieure pour le premier palier à roulement (16).

8. Dispositif d'équilibrage de masse (1b) selon la revendication 1, **caractérisé en ce que** le moteur à combustion interne à piston alternatif présente un tourillon de palier (19) entouré par le deuxième palier à roulement (17) pour supporter les arbres d'équilibrage (2b, 3b), le point de palier (8b, 9b) du deuxième arbre d'équilibrage (3b) étant réalisé sous forme cylindrique creuse avec la surface d'enveloppe extérieure servant de siège de palier ou de piste de roulement intérieure pour le premier palier à roulement (16) et avec la surface d'enveloppe intérieure servant de siège de palier ou de piste de roulement extérieure pour le deuxième palier à roulement (17).

9. Dispositif d'équilibrage de masse (1b) selon la revendication 8, **caractérisé en ce que** le tourillon de palier (19) sert de piste de roulement intérieure pour le deuxième palier à roulement (17).

10. Dispositif d'équilibrage de masse (1a) selon la revendication 1, **caractérisé en ce que** les arbres d'équilibrage (2a, 3a) sont à chaque fois pourvus d'un engrenage à denture droite (12, 13), l'un des engrenages à denture droite (12) s'engrenant directement avec une roue d'entraînement (14) et l'autre engrenage à denture droite (13) s'engrenant avec la roue d'entraînement (14) au moyen d'une roue intermédiaire (15).
